# EUROPEAN PATENT APPLICATION

(11) **EP 4 024 980 A1**
(43) Date of publication of application: **06.07.2022**
(21) Application number: 20858762.6
(22) Date of filing: 20.08.2020
(51) Int. Cl.: H04W 72/02, H04W 72/04, H04W 92/18, H04W 4/40, H04W 76/14, H04W 28/04, H04W 28/06

(54) **TERMINAL AND COMMUNICATION METHOD**

(30) Priority: 28.08.2019 JP 2019155869
(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/031538
(87) International publication number: WO 2021/039607

(57) **Abstract**

A terminal is provided that includes a reception unit configured to receive data by terminal-to-terminal direct communication from another terminal, a transmission unit configured to transmit a response related to retransmission control corresponding to the data to the another terminal, and a control unit configured to, when the reception unit receives a plurality of data items by terminal-to-terminal direct communication, determine a response related to retransmission control that is transmitted to the other terminal by multiplexing a plurality of responses related to retransmission control.

## Description

### [FIELD OF INVENTION]

The present invention relates to a terminal and a communication method in a wireless communication system.

### [BACKGROUND OF INVENTION]

In LTE (Long Term Evolution) and LTE successor systems (e.g., LTE-A (LTE Advanced), NR (New Radio) (also referred to as 5G)), a D2D (Device to Device) technology in which terminals communicate directly with each other without using a base station is being discussed (e.g., Non-Patent Document 1).

The D2D reduces traffic between the terminals and the base stations and enables communication between the terminals even when the base stations are unable to communicate during a disaster, etc. Although the 3GPP (3rd Generation Partnership Project) refers to D2D as a "sidelink," the more generic term D2D is used herein. However, in the description of embodiments described below, the sidelink is also used as needed.

The D2D communication is broadly classified into D2D discovery for discovering other terminals capable of communication, and D2D communication (D2D direct communication, D2D communication, direct communication between terminals, etc.,) for communicating directly between terminals. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2).

### [Citation List]

### [Non-Patent Document]

[Non-Patent Document 1] 3GPP TS 36.211 V15.6.0 (2019-06)
[Non-Patent Document 2] 3GPP TR 22.886 V15.1.0 (2017-03)

### SUMMARY OF THE INVENTION

### [TECHNICAL PROBLEM]

For direct communication between terminals in NR-V2X, there is consideration to support HARQ (Hybrid automatic repeat request) control. On the other hand, the method of notifying the base station of the information pertaining to the HARQ response of the terminal-to-terminal direct communication and the HARQ response of the downlink link, from the terminal that has transmitted the terminal-to-terminal direct communication, has not been clear.

The present invention has been made in view of the above points, and is intended to appropriately perform retransmission control in terminal-to-terminal direct communication.

### [SOLUTION TO PROBLEM]

According to the disclosed technique, a terminal is provided that includes a reception unit configured to receive data by terminal-to-terminal direct communication from another terminal, a transmission unit configured to transmit a response related to a retransmission control corresponding to the data to the other terminal, and a control unit configured to, when the reception unit receives a plurality of data items by terminal-to-terminal direct communication, determines a response related to retransmission control that is transmitted to the other terminal by multiplexing a plurality of responses related to retransmission control.

### [ADVANTAGEOUS EFFECTS OF INVENTION]

According to an embodiment of the present invention, it is possible to execute retransmission control appropriately in the direct communication between terminals.

### BRIEF DESCRIPTION OF THE DRAWINGS

Fig. 1 is a drawing illustrating V2X.
Fig. 2 is a drawing illustrating an example (1) of a V2X transmission mode.
Fig. 3 is a drawing illustrating an example (2) of a V2X transmission mode.
Fig. 4 is a drawing illustrating an example (3) of a V2X transmission mode.
Fig. 5 is a drawing illustrating an example (4) of a V2X transmission mode.
Fig. 6 is a drawing illustrating an example (5) of a V2X transmission mode.
Fig. 7 is a drawing illustrating an example (1) of a V2X communication type.
Fig. 8 is a drawing illustrating an example (2) of a V2X communication type.
Fig. 9 is a drawing illustrating an example (3) of a V2X communication type.
Fig. 10 is a drawing illustrating a configuration and an operation (1) of a wireless communication system according to an embodiment of the present invention.
Fig. 11 is a drawing illustrating an example of HARQ-ACK codebook transmission.
Fig. 12 is a drawing illustrating an example of the order of HARQ-ACK.
Fig. 13 is a drawing illustrating a DAI.
Fig. 14 is a drawing illustrating a configuration and an operation (2) of a wireless communication system according to an embodiment of the present invention.
Fig. 15 is a drawing illustrating an example of a functional structure of a base station 10 according to an embodiment of the present invention.
Fig. 16 is a drawing illustrating an example of a functional structure of a terminal 20 according to an embodiment of the present invention.
Fig. 17 is a drawing illustrating examples of hardware structures of a base station 10 or terminal 20 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Furthermore, in an embodiment of the present invention, the duplex method may be TDD (Time Division Duplex), FDD (Frequency Division Duplex), or other methods (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

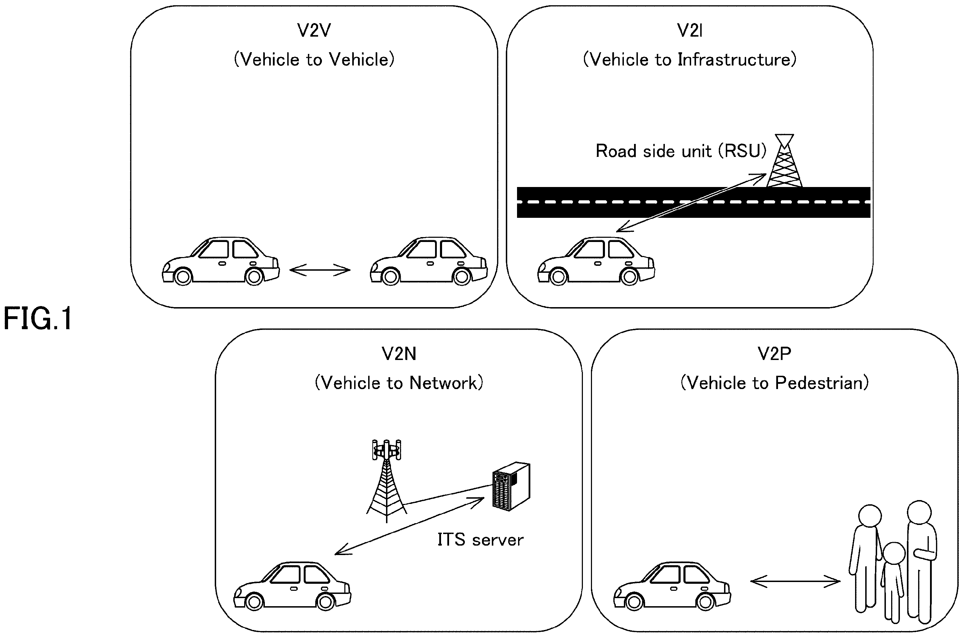

Fig. 1 is a drawing illustrating V2X. In 3GPP, enhancing D2D functions to realize V2X (Vehicle to Everything) or eV2X (enhanced V2x) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is held by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, QoS (Quality of Service) control.

With respect to LTE V2X or NR V2X, it is assumed that discussions may be not limited to 3GPP specifications in the future. For example, it is assumed to be discussed on: how to secure interoperability; how to reduce cost by implementing higher layers; how to use or how to switch multiple RATs (Radio Access Technologies); how to handle regulations of each country; how to obtain and distribute data of LTE/NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), terminal capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) resource arrangement (allocation) in the time domain
2) resource arrangement (allocation) in the frequency domain
3) synchronization signal that should be referred to (including SLSS (Sidelink Synchronization Signal))
4) reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is enabled (available). In Mode 4, terminal 20 autonomously selects transmission resources from a resource pool.

It should be noted that a slot in an embodiment of the present invention may be read on (replaced with) a symbol, a mini slot, a subframe, a radio frame, or a TTI (Transmission Time Interval). Further, a cell in an embodiment of the present invention may be read on (replaced with) a cell group, a carrier component, a BWP (bandwidth part), a resource pool, a resource, a RAT (Radio Access Technology), a system (including a wireless LAN), etc.

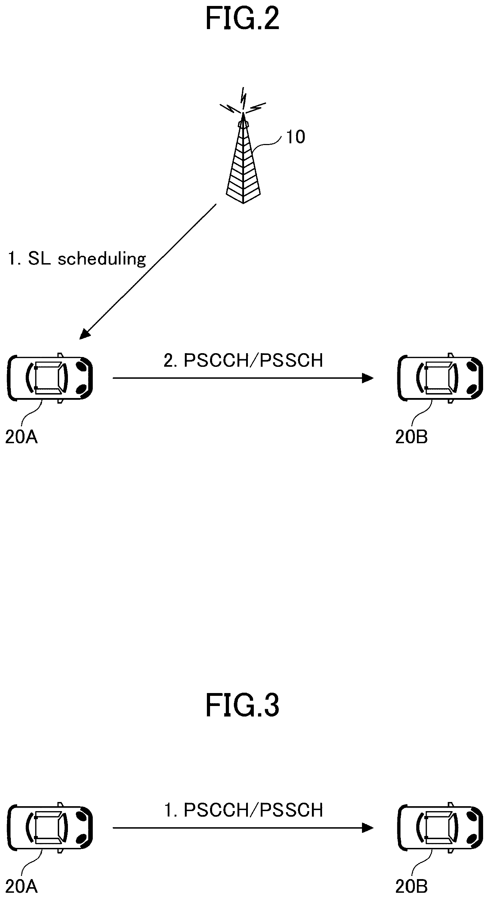

Fig. 2 is a drawing illustrating an example (1) of a V2X transmission mode. In a transmission mode of sidelink communication illustrated in Fig. 2, in step 1, a base station 10 transmits a sidelink scheduling to a terminal 20A. Next, the terminal 20A transmits PSCCH (Physical Sidelink Control Channel) and PSSCH (Physical Sidelink Shared Channel) to a terminal 20B based on the received scheduling (step 2). The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). It should be noted that the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the UE itself performs resource selection.

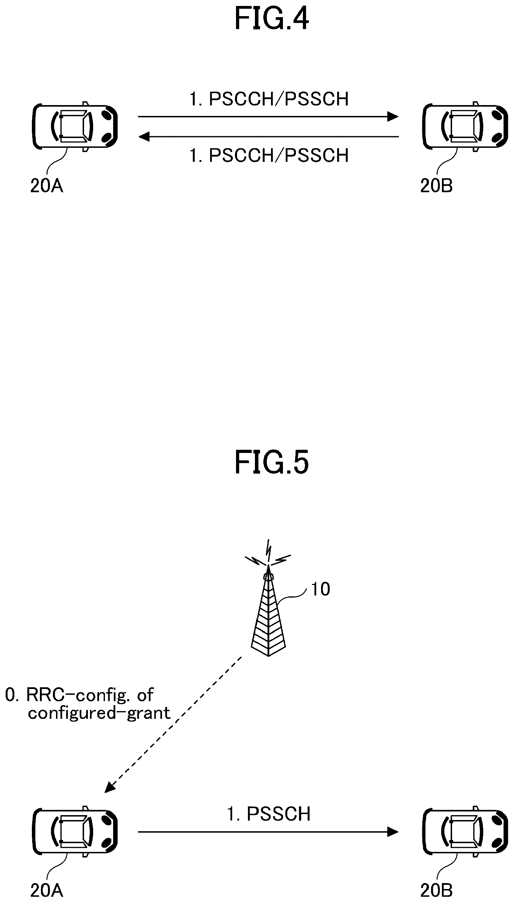

Fig. 4 is a drawing illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH using autonomously selected resources (step 1) The transmission mode of sidelink communication illustrated in Fig. 4 may be referred to as a sidelink transmission mode 2a in NR. In the sidelink transmission mode 2 in NR, the terminal 20 itself performs resource selection.

Fig. 5 is a drawing illustrating an example (4) of a V2X transmission mode. In a transmission mode of sidelink communication illustrated in Fig. 5, in step 0, a base station 10 transmits a sidelink grant to a terminal 20A via RRC (Radio Resource Control) configuration. Next, the terminal 20A transmits PSSCH to the terminal 20B based on the received resource pattern (step 1). The transmission mode of sidelink communication illustrated in Fig. 5 may be referred to as a sidelink transmission mode 2c in NR.

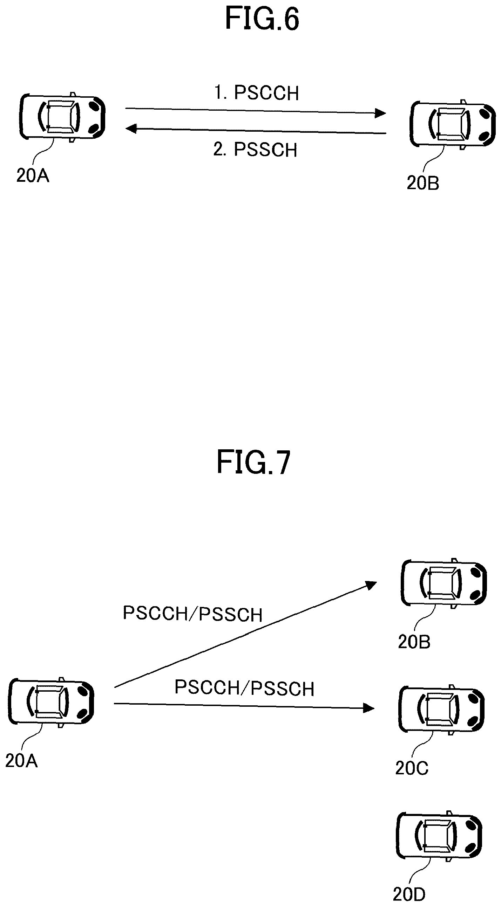

Fig. 6 is a drawing illustrating an example (5) of a V2X transmission mode. Fig. 6 is a drawing illustrating an example (5) of a V2X transmission mode. In the side-link communication transmission mode illustrated in FIG. 6, in step 1, the terminal 20A transmits sidelink scheduling to the terminal 20B via PSCCH. Next, the terminal 20B transmits PSSCH to the terminal 20A based on the received scheduling (step 2). The transmission mode of sidelink communication illustrated in Fig. 6 may be referred to as a sidelink transmission mode 2d in NR.

Fig. 7 is a drawing illustrating an example (1) of a V2X communication type. The sidelink communication type illustrated in Fig. 7 is uni-cast. The terminal 20A transmits PSCCH and PSSCH to terminal 20. In an example illustrated in Fig. 7, the terminal 20A performs uni-cast to the terminal 20B, and performs uni-cast to the terminal 20C.

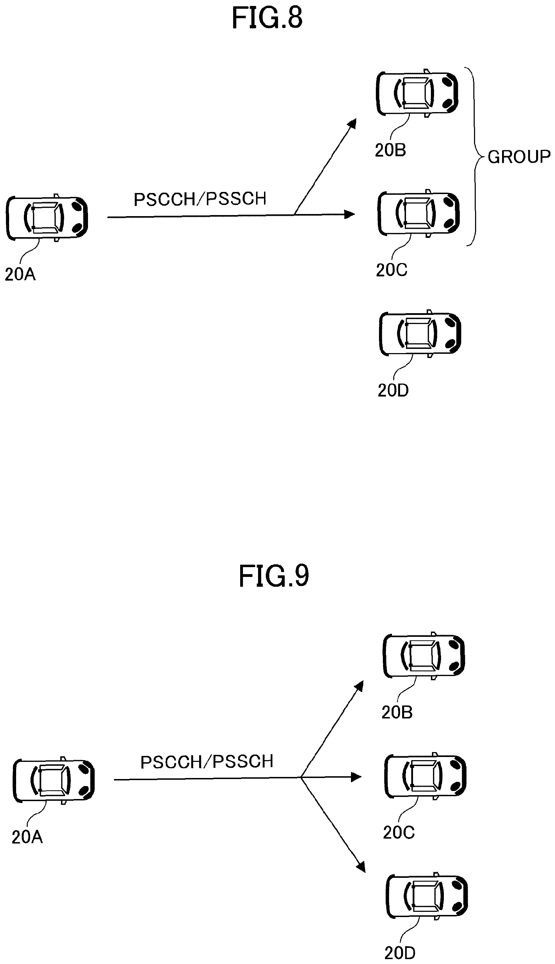

Fig. 8 is a drawing illustrating an example (2) of a V2X communication type. The sidelink communication type illustrated in Fig. 8 is group-cast. The terminal 20A transmits PSCCH and PSSCH to a group to which one or more terminals 20 belong. In an example illustrated in Fig. 8, the group includes a terminal 20B and a terminal 20C, and the terminal 20A performs group-cast to the group.

Fig. 9 is a drawing illustrating an example (3) of a V2X communication type. The sidelink communication type illustrated in Fig. 9 is broad-cast. The terminal 20A transmits PSCCH and PSSCH to one or more terminals 20. In an example illustrated in Fig. 9, the terminal 20A performs broad-cast to terminal 20B, terminal 20C, and terminal 20D. Note that the terminal 20A shown in Figs. 7 to 9 may be referred to as a header UE.

In addition, it is assumed that HARQ is supported for uni-cast and group-cast of sidelink in NR-V2X. In addition, SFCI (Sidelink Feedback Control Information) containing a HARQ response is defined in NR-V2X. In addition, SFCI transmission via PSFCH (Physical Sidelink Feedback Channel) is under consideration.

Note that, in the following description, it is assumed that PSFCH is used in the transmission of HARQ-ACK on sidelink. However, this is just an example. For example, PSCCH may be used to transmit HARQ-ACK on sidelink, PSSCH may be used to transmit HARQ-ACK on sidelink, or other channels may be used to transmit HARQ-ACK on sidelink.

As described above, it is assumed that HARQ operation is supported in NR-V2X. However, no specific proposal has been made on how to transmit multiple HARQ-ACKs corresponding to SL data and DL data in the configuration assumed in NR-V2X. No specific proposal has been made for the structure of a HARQ codebook for SL and DL data. In addition, no specific proposal has been made for a payload size for sending HARQ-ACKs corresponding to SL data and DL data. Accordingly, there is a problem with the prior art that multiple HARQ-ACK reports cannot be properly implemented.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

### (Embodiment 1)

In a first embodiment, in the sidelink transmission mode 1 illustrated in FIG. 2, the terminal 20B that has received SL data via PSSCH transmits HARQ-ACK via PSFCH to the terminal 20A that has transmitted the data. Further, the terminal 20A transmits HARQ-ACK including the HARQ-ACK to the base station 10.

### <Configuration example of embodiment 1>

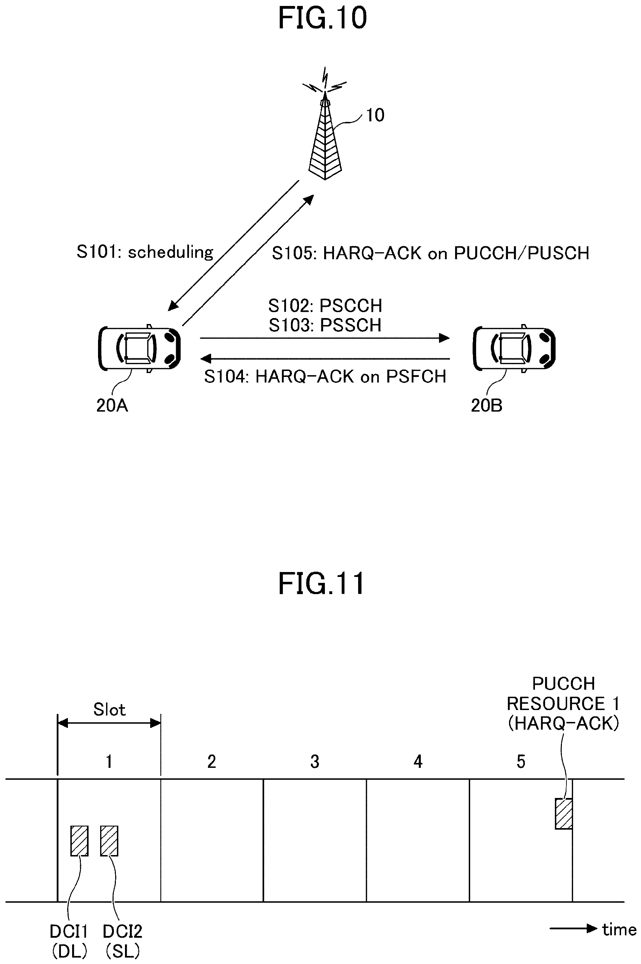

Fig. 10 is a diagram illustrating a configuration (and an operation) of a wireless communication system according to the first embodiment. The configuration may be the same in an embodiment 2.

As shown in Fig. 10, the wireless communication system according to the first embodiment includes a base station 10, a terminal 20A, and a terminal 20B. Note that there are many user devices, but Fig. 10 shows a terminal 20A and a terminal 20B as examples.

Hereinafter, when the terminals 20A, 20B, or the like are not particularly distinguished, the term "terminal 20" or "user device" will be simply described. Fig. 10 shows, for example, a case where both the terminal 20A and the terminal 20B are within a coverage of a cell. However, the operation in the first embodiment can be applied to a case where the terminal 20B is outside the coverage.

As described above, in an embodiment, the terminal 20 is, for example, a device mounted in a vehicle such as an automobile and has a cellular communication function as a UE in LTE or NR and a sidelink function. Terminal 20 may be a conventional portable terminal (such as a smartphone) . Further, the terminal 20 may also be an RSU. The RSU may be a UE-type RSU having the function of a UE or a gNB-type RSU having the function of a base station device.

Note that the terminal 20 need not be a single housing device. For example, even when various sensors are arranged and distributed in a vehicle, a device including the various sensors is the terminal 20.

Further, processing contents of sidelink transmission data of the terminal 20 are basically the same as those of UL transmission in LTE or NR. For example, the terminal 20 scrambles a codeword of the transmission data, modulates to generate complex-valued symbols, and maps the complex-valued symbols to one or two layers, and performs precoding. Further, the precoded complex-valued symbols are mapped to a resource element to generate a transmission signal (e.g., complex-valued time-domain SC-FDMA signal), and the generated signal is transmitted from each antenna port.

Further, the base station 10 has a function of cellular communication as a base station in LTE or NR and a function of enabling communication of the terminal 20 according to an embodiment of the present invention (e.g., resource pool setting, resource allocation, etc.). Further, the base station 10 may also be an RSU (gNB-type RSU).

Further, in the wireless communication system according to the first embodiment, a signal waveform used by the terminal 20 for SL or UL may be OFDMA, SC-FDMA, or other signal waveforms.

### <Operation example of embodiment 1>

An operation example of the wireless communication system according to the first embodiment will be described with reference to Fig. 10.

In S101, the base station 10 performs SL scheduling by sending DCI (Downlink Control Information) to the terminal 20A via PDCCH. Hereafter, for the sake of convenience, the DCI for SL scheduling is called an SL scheduling DCI.

Further, in the first embodiment, it is assumed that the base station 10 transmits a DCI for DL scheduling (which may be referred to as DL assignment) to the terminal 20A via the PDCCH in S101. Hereafter, for the sake of convenience, the DCI for DL scheduling is called a DL scheduling DCI. The terminal 20A, which has received a DL scheduling DCI, receives the DL data via PDSCH using a resource specified by the DL scheduling DCI.

In S102 and S103, the terminal 20A transmits an SCI (Sidelink Control Information) via PSCCH using a resource specified by the SL scheduling DCI and transmits SL data via the PSSCH. Note that, in an SL scheduling DCI, only a PSSCH resource may be specified. In this case, for example, the terminal 20A may transmit the SCI (PSCCH) using frequency resources adjacent to the PSSCH frequency resources with the same time resources as the PSSCH time resources.

The terminal 20B receives the SCI (PSCCH) and the SL data (PSSCH) transmitted from the terminal 20A. The SCI received via the PSCCH includes information about a PSFCH resource for the terminal 20B to send a HARQ-ACK for receipt of the data.

The information of the resource is included in the DL scheduling DCI or SL scheduling DCI transmitted from the base station 10 in S101, and the terminal 20A acquires the information of the resource from the DL scheduling DCI or the SL scheduling DCI and includes the acquired information in the SCI. Alternatively, the DCI transmitted from the base station 10 may not include the information of the resource, and the terminal 20A may autonomously include the information of the resource in the SCI and transmit the information of the resource.

In S104, the terminal 20B transmits a HARQ-ACK for the received data to the terminal 20A using the PSFCH resource specified in the received SCI.

In S105, the terminal 20A transmits the HARQ-ACK using a PUCCH resource specified by the DL scheduling DCI (or the SL scheduling DCI) at a timing (for example, at a slot unit timing) specified by the DL scheduling DCI (or the SL scheduling DCI), and the base station 10 receives the HARQ-ACK. In a codebook of the HARQ-ACK, the HARQ-ACK received from the terminal 20B and the HARQ-ACK for DL data may be included. Note, however, the HARQ-ACK for DL data is not included if DL data is not allocated.

### <Embodiment 1: processing contents related to HARQ-ACK codebook>

Hereinafter, an example of the configuration method of the HARQ-ACK codebook transmitted by the terminal 20A to the base station 10 will be described in more detail.

### <Configuration>

In a case where each of the DL scheduling DCI and the SL scheduling DCI received by the terminal 20A contains a value for PDSCH/PDCCH-to-HARQ_feedback timing indicator field and where the same slot is indicated by the value of the DL scheduling DCI and by the value of the SL scheduling DCI, the terminal 20A transmits HARQ-ACK for the DL data and HARQ-ACK for the SL data (HARQ-ACK received by the terminal 20A from the terminal 20B in S104) using the same PUCCH resource. In other words, in this case, the terminal 20A includes the HARQ-ACK for the DL data and the HARQ-ACK for the SL data (the HARQ-ACK received by the terminal 20A in S104) in a HARQ-ACK codebook and transmits the HARQ-ACK codebook.

The above-described "PDSCH/PDCCH-to-HARQ_feedback timing indicator field" indicates "PDSCH-to-HARQ_feedback timing indicator field" or "PDCCH-to-HARQ_feedback timing indicator field".

The "PDSCH-to-HARQ_feedback timing indicator field" is a field included in the DL scheduling DCI, whose value indicates HARQ feedback timing (e.g., number of slots) from PDSCH (DL data) reception.

The "PDCCH-to-HARQ_feedback timing indicator field" is a field included in the SL scheduling DCI, whose value indicates HARQ feedback timing (e.g., number of slots) from reception of the PDCCH (the SL scheduling DCI).

The above is an example and the DL scheduling DCI may include a "PDCCH-to-HARQ_feedback timing indicator field" or the SL scheduling DCI may include a "PDSCH-to-HARQ_feedback timing indicator field".

For example, the above-described processing may be replaced with "the terminal 20A transmits HARQ-ACK for DL data and HARQ-ACK for SL data (HARQ-ACK received by the terminal 20A in S104) using the same PUCCH resource in a case where the DL scheduling DCI received by the terminal 20A includes a value of PDSCH-to-HARQ_feedback timing indicator field, where the SL scheduling DCI includes a value of PDCCH-to-HARQ_feedback timing indicator field, and where the same slot is indicated as the HARQ feedback timing by those values".

FIG. 11 shows an example of DCI reception and HARQ-ACK transmission at the terminal 20A. In FIG. 11, DCI 1 indicates a DL scheduling DCI and DCI 2 indicates an SL scheduling DCI. In Fig. 11, for example, the terminal 20A receives the DCI 1 and the DCI 2 in the slot 1. In a case where both of the DCIs indicate a slot 5 as HARQ feedback timing, the terminal 20A uses a PUCCH resource 1 to transmit a HARQ-ACK codebook containing HARQ-ACK for DL data and HARQ-ACK for SL data to the base station 10.

### <Order of HARQ-ACK>

There are the following options A, B, and C regarding the order of HARQ-ACK when the terminal 20 creates a HARQ-ACK codebook containing HARQ-ACK for DL data and HARQ-ACK for SL data.

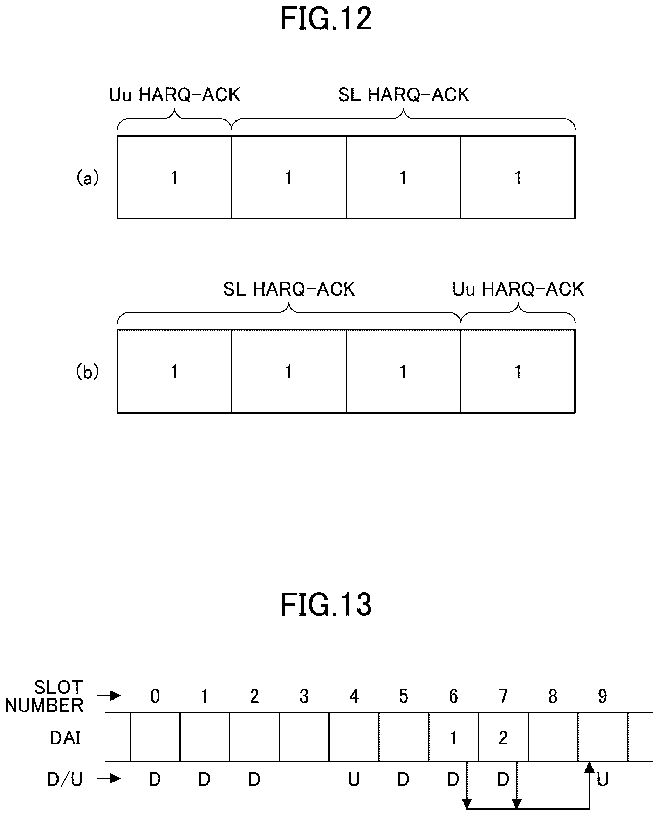

Option A) In an option A, for example, as illustrated in Fig. 12 (a), HARQ-ACK for DL data (described as Uu HARQ-ACK in Fig. 12) is stored first, and then HARQ-ACK for SL data (SL HARQ-ACK) is stored.

Option B) In an option B, for example, as illustrated in Fig. 12 (b), the HARQ-ACK for SL data is stored first, and then, the HARQ-ACK for DL data is stored.

Note that, in an example of Fig. 12, a case is illustrated where the HARQ-ACK codebook consists of 4-bit HARQ-ACK information bits, and where all bits are 1 as an example. Further, it is assumed that the left end of the HARQ-ACK codebook shown in FIG. 12 is the first in the order in which the bits of the HARQ-ACK codebook are arranged, and the bits are arranged from the left end to the right. Note that this is an example.

Further, in an example of Fig. 12, it is assumed that the terminal 20A transmits SL data (PSSCH) to a plurality of user devices and receives HARQ-ACK for SL data from the plurality of user devices.

When the terminal 20A receives the HARQ-ACK for SL data from a plurality of user devices and stores the HARQ-ACK from each user device in each bit of the HARQ-ACK codebook, the order in which the HARQ-ACK from the plurality of user devices is arranged in the HARQ-ACK codebook is determined, for example, based on the UE-ID of the plurality of user devices (e.g., order in which the IDs are large or order in which the IDs are small) . Alternatively, when the terminal 20A receives the SL scheduling DCI for each of the plurality of user devices from the base station 10 for transmission of SL data to the plurality of user devices, the order in which the HARQ-ACK from the plurality of user devices is arranged in the HARQ-ACK codebook may be determined by the order of time at which the respective SL scheduling DCIs are received, or determined by the order of time at which the respective SCIs are transmitted to the plurality of user devices.

Option C) In an option C, instead of having a predetermined method of determining the order as described above, the order is specified in the DL scheduling DCI or the SL scheduling DCI received by the terminal 20A, and the terminal 20A determines the order according to the specification.

### <DAI>

The DL scheduling DCI (or SL scheduling DCI) includes a DAI (Downlink assignment index). Fig. 13 is a drawing illustrating an example of DAI. Fig. 13 shows an example in which a configuration is made to the terminal 20A to transmit HARQ-ACK in slot 9 (UL) for DL data received in slot 6 (DL) and for DL data received in slot 7 (DL). In this case, as an example, the DCI for DL data assignment received in slot 6 includes 1 as a DAI, and the DCI for DL data assignment received in slot 7 includes 2 as a DAI. According to the above, it is possible for the terminal 20A to determine whether or not the DL data corresponding to the HARQ-ACK to be transmitted in slot 9 has been received. Regarding the DAI, there are options D and E as listed below.

Option D) In an option D, the SL scheduling DCI transmitted from base station 10 to terminal 20A does not include DAI, and the DAI contained in the DL scheduling DCI is not associated with HARQ-ACK for SL data.

In this case, regarding the terminal 20B that receives SL data via PSSCH, for example, a DCI for the SL data is included by the terminal 20A in an SCI transmitted via PSCCH, and the terminal 20B may acquire the DAI from the SCI and use the acquired DAI.

Option E) In an option E, a DAI is included in an SL scheduling DCI transmitted from base station 10 to terminal 20A. The DAI is included in an SCI and transmitted from the terminal 20A to the terminal 20B via PSCCH, and the terminal 20B performs SL HARQ-ACK transmission using the DAI. The terminal 20A utilizes a DAI included in a DL scheduling DCI for the transmission of HARQ-ACK for DL data.

### <PUCCH Resources>

For PUCCH resources, there are options F-H as follows.

Option F) In an option F, at the terminal 20A, a PUCCH resource for transmitting a HARQ-ACK codebook, including HARQ-ACK for DL data and HARQ-ACK for SL data (or including HARQ-ACK for DL data or HARQ-ACK for SL data), is determined by the last received DCI of a plurality of DL scheduling DCIs having a PDSCH-to-HARQ_feedback timing indicator field specifying the same slot.

In other words, for example, when the terminal 20A receives DCI-A, DCI-B, and DCI-C as the DL scheduling DCI in this order, and when each of the DCI-A, DCI-B, and DCI-C contains a value specifying the same slot as the PDSCH-to-HARQ_feedback timing, the terminal 20A transmits a HARQ-ACK codebook using the PUCCH resource included in the DCI-C in the said slot.

Option G) In an option G, at the terminal 20A, a PUCCH resource for transmitting HARQ-ACK codebook, including HARQ-ACK for DL data and HARQ-ACK for SL data (or HARQ-ACK for DL data or HARQ-ACK for SL data), is determined by the last received DCI of a plurality of SL scheduling DCIs having a PDSCH/PDCCH-to-HARQ_feedback timing indication field specifying the same slot.

In other words, for example, when the terminal 20A receives DCI-A, DCI-B, and DCI-C as the SL scheduling DCI in this order, and when each of the DCI-A, DCI-B, and DCI-C contains a value specifying the same slot as the PDSCH-to-HARQ_feedback timing indicator field, the terminal 20A transmits a HARQ-ACK codebook using the PUCCH resource included in the DCI-C in the said slot.

Option H) In an option H, at terminal 20A, a PUCCH resource for transmitting a HARQ-ACK codebook containing HARQ-ACK for DL data and HARQ-ACK for SL data (or including HARQ-ACK for DL data or HARQ-ACK for SL data) is determined by the last received DCI of one or more SL scheduling DCIs and one or more DL scheduling DCIs having a PDSCH/PDCCH-to-HARQ_feedback timing indicator field specifying the same slot.

In other words, for example, when the terminal 20A receives DCI-A and DCI-B as the SL scheduling DCI in this order, then DCI-C is received as the DL scheduling DCI, and each of the DCI-A, DCI-B, and DCI-C contains a value specifying the same slot as the PDSCH/PDCCH-to-HARQ_feedback timing indicator field, the terminal 20A transmits a HARQ-ACK codebook in the slot using the PUCCH resource included in the DCI-C.

Note that in a case of a conflict between a PUCCH resource and a PUSCH resource (when allocated to at least the same time resource), etc., the terminal 20A may send the HARQ-ACK codebook with the PUSCH resource without using the PUCCH resource.

### <Other examples>

In the above examples, a DCI transmitted from the base station 10 to the terminal 20A includes information of a PSFCH resource used by the terminal 20B to transmit HARQ-ACK, and an SCI transmitted from the terminal 20A includes information of the PSFCH resource.

Alternatively, none of the DL scheduling DCI and the SL scheduling DCI transmitted from the base station 10 to the terminal 20A may contain PSFCH resource information, and the SCI transmitted from the terminal 20A may not contain PSFCH resource information.

In this case, for example, the terminal 20B, which has received the SCI corresponding to the SL data, autonomously selects a PSFCH resource and transmits HARQ-ACK for the SL data to the terminal 20A using the selected resource.

Further, the terminal 20A may indicate whether a PSFCH resource is specified by a value of a PSFCH resource indicator (abbreviated as PRI) by including the PRI in the SCI transmitted to the terminal 20B.

As an example, when PRI = 000, the terminal 20B determines that no PSFCH resource is specified, and autonomously selects a resource. Further, for example, if the PRI is greater than 000 (e.g., 010), the terminal 20B selects a corresponding PSFCH resource and uses it to transmit HARQ-ACK for the SL data.

### (Embodiment 2)

In a second embodiment, in the sidelink transmission mode 1 illustrated in FIG. 2, the terminal 20B, which has received SL data via PSSCH, transmits HARQ-ACK via PSFCH to the terminal 20A that has transmitted the data. Subsequently, the terminal 20A transmits HARQ-ACK including the HARQ-ACK and HARQ-ACK related to the PDSCH reception to the base station 10.

### <Configuration example of embodiment 2>

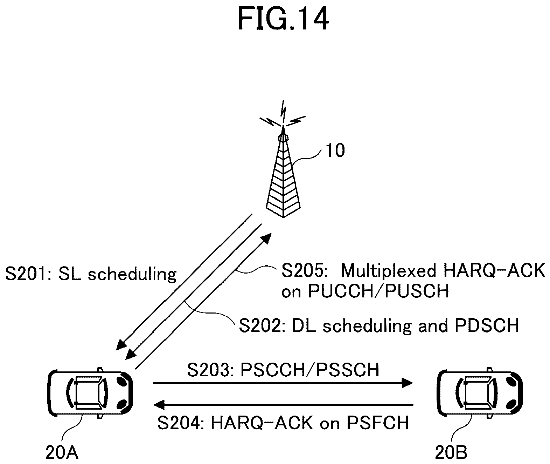

Fig. 14 is a diagram illustrating a configuration (and an operation) of a wireless communication system according to the second embodiment.

In S201, the base station 10 performs SL scheduling by sending DCI to the terminal 20A via PDCCH. In S202, the base station 10 transmits DCI for DL scheduling to the terminal 20A via PDCCH. The terminal 20A, which has received the DL scheduling DCI, receives DL data via PDSCH using a resource specified by the DL scheduling DCI. The order of execution of S201 and S202 may be reversed, and S202 may be executed later than S203 or S204.

In S203, the terminal 20A transmits an SCI via PSCCH using a resource specified in the SL scheduling DCI and transmits SL data via PSSCH. Note that, in the SL scheduling DCI, only a PSSCH resource may be specified. In this case, for example, the terminal 20A may transmit the SCI (PSCCH) using a frequency resource adjacent to the PSSCH frequency resource with the same time resource as the PSSCH time resource.

The terminal 20B receives the SCI (PSCCH) and the SL data (PSSCH) transmitted from the terminal 20A. The SCI received via PSCCH may include information about a PSFCH resource for the terminal 20B to send HARQ-ACK for receipt of the data.

The information of the resource may be included in the DL scheduling DCI or the SL scheduling DCI transmitted from the base station 10 in S201 and S202, and the terminal 20A may acquire the information of the resource from the DL scheduling DCI or the SL scheduling DCI and include the acquired information in the SCI. Alternatively, the DCI transmitted from the base station 10 may not include the information of the resource, and the terminal 20A may autonomously include the information of the resource in the SCI and transmit the SCI including the information.

In S204, the terminal 20B transmits HARQ-ACK for the received data to the terminal 20A using the PSFCH resource specified by the received SCI.

In S205, the terminal 20A transmits HARQ-ACK using a PUCCH resource specified by the DL scheduling DCI (or the SL scheduling DCI) at a timing (for example, at a slot unit timing) specified by the DL scheduling DCI (or the SL scheduling DCI), and the base station 10 receives the HARQ-ACK. The HARQ-ACK codebook may include HARQ-ACK for SL data received from the terminal 20B and HARQ-ACK for DL data. Note, however, that the HARQ-ACK for DL data is not included if the DL data is not allocated.

Here, the terminal 20A may use one PUCCH resource to transmit a plurality of HARQ-ACK bits, including HARQ-ACK for SL data. For example, HARQ-ACK corresponding to DL data may be multiplexed with HARQ-ACK corresponding to SL data on one HARQ-ACK codebook.

For example, a HARQ-ACK codebook corresponding to DL data may be used to multiplex HARQ-ACK corresponding to DL data and HARQ-ACK corresponding to SL data.

For example, a type 1 HARQ-ACK codebook, which is a semi-static HARQ-ACK codebook, may be applied to HARQ-ACK corresponding to DL data and a HARQ-ACK codebook corresponding to SL data. For example, a HARQ-ACK payload size in the type 1 HARQ-ACK codebook may be a payload size of HARQ-ACK corresponding to the DL data plus the number of PSCCH and PSSCH transmission opportunities (occasions) fed back at the same time. Further, if any PDSCH or PSSCH is not received at the PDSCH transmission opportunity and the PSSCH transmission opportunity, a NACK may be generated and transmitted.

Further, for example, a type 2 HARQ-ACK codebook, which is a dynamic HARQ-ACK codebook, may be applied to HARQ-ACK corresponding to DL data and a HARQ-ACK codebook corresponding to SL data. For example, a HARQ-ACK payload size in the type 2 HARQ-ACK codebook may be indicated to the terminal 20A by DAI.

The information indicated by DAI may be a counter that adds PSCCH and PSSCH sent from a transmission UE to a reception UE, or the information may be a total sum of PDSCH, and the PSCCH and PSSCH sent from the transmission UE to the reception UE.

NACK may be generated and transmitted if a false positive of PDCCH is detected by DAI.

By using the type 1 HARQ-ACK codebook or the type 2 HARQ-ACK codebook described above, the terminal 20A can report HARQ-ACK corresponding to the DL data and HARK-ACK corresponding to the SL data at any timing, and treat the SL as one CC (Component Carrier) of the DL.

As another example, when HARQ-ACK corresponding to DL data and HARQ-ACK corresponding to SL data are multiplexed, a HARQ-ACK codebook related to DL data and a HARQ-ACK codebook related to SL data may be used, respectively.

For example, with respect to the HARQ-ACK codebook for DL data and the HARQ-ACK codebook for SL data, each of the HARQ-ACK codebooks may be configured by upper layer parameters or predefined by specification.

For example, with respect to the HARQ-ACK codebook for DL data, or with respect to the HARQ-ACK codebook for SL data, one HARQ-ACK codebook may be applied to the other. In other words, the HARQ-ACK codebook for DL data may be configured in the same way as the HARQ-ACK codebook for SL data, and the HARQ-ACK codebook for SL data may be configured in the same way as the HARQ-ACK codebook for DL data.

In a case where the HARQ-ACK codebook for DL data and the HARQ-ACK codebook for SL data are used, respectively, and where the type 1 HARQ-ACK codebook, which is a semi-static HARQ-ACK codebook, is applied to the HARQ-ACK codebook for SL data, the HARQ-ACK payload size of the type 1 HARQ-ACK codebook may correspond to the number of PSCCH and PSSCH transmission occasions fed back at the same timing. Further, NACK may be generated and transmitted if PSCCH and PSSCH are not received on either PSCCH or PSSCH transmission opportunities.

For example, the order of HARQ-ACK bits in the type 1 HARQ-ACK codebook may be an order of HARK-ACK corresponding to DL data and HARQ-ACK corresponding to SL data, or an order of HARQ-ACK corresponding to SL data and HARK-ACK corresponding to DL data.

In a case where a type 1 HARQ-ACK codebook is applied to the HARQ-ACK codebook for SL Data, where PUCCH overlaps PUSCH, and where HARQ-ACK bits are multiplexed on PUSCH, the DAI included in the UL grant may indicate in a 2-bit field that HARK-ACK for DL data and HARQ-ACK for SL data are present, respectively. Alternatively, in a case where PUCCH overlaps PUSCH and where HARQ-ACK bits are multiplexed on PUSCH, the DAI included in the UL grant may indicate that either HARK-ACK corresponding to the DL data or HARQ-ACK corresponding to the SL data is present. Alternatively, in a case where PUCCH overlaps PUSCH and where HARQ-ACK bits are multiplexed on PUSCH, the DAI included in the UL grant may indicate that at least one of the HARK-ACK corresponding to the DL data and the HARQ-ACK corresponding to the SL data is present.

In a case where the HARQ-ACK codebook for DL Data and the HARQ-ACK codebook for SL Data are used, respectively, and where the type 2 HARQ-ACK codebook, which is a dynamic HARQ-ACK codebook, is applied to the HARQ-ACK codebook for SL Data, the HARQ-ACK payload size of the type 2 HARQ-ACK codebook may be indicated by DAI. The DAI may be separated and counted or managed with respect to the HARQ-ACK codebook for DL data and the HARQ-ACK codebook for SL data.

The information indicated by DAI may be a counter that adds PSCCH and PSSCH sent from a transmission UE to a reception UE, or the information may be a total sum of PDSCH, and the PSCCH and PSSCH sent from the transmission UE to the reception UE.

NACK may be generated and transmitted if a false positive of PDCCH is detected by DAI.

In a case where a type 2 HARQ-ACK codebook is applied to the HARQ-ACK codebook for SL Data, where PUCCH overlaps PUSCH, and where HARQ-ACK bits are multiplexed on PUSCH, the DAI included in the UL grant may indicate in a 2-bit field that HARK-ACK for DL data and HARQ-ACK for SL data are present, respectively. Alternatively, in a case where PUCCH overlaps PUSCH and where HARQ-ACK bits are multiplexed on PUSCH, the DAI included in the UL grant may indicate that either HARK-ACK corresponding to the DL data or HARQ-ACK corresponding to the SL data is present. Alternatively, in a case where PUCCH overlaps PUSCH and where HARQ-ACK bits are multiplexed on PUSCH, the DAI included in the UL grant may indicate that at least one of the HARK-ACK corresponding to the DL data and the HARQ-ACK corresponding to the SL data is present.

As another example, the terminal 20B may use one PSFCH resource to transmit a plurality of HARQ-ACK bits containing HARQ-ACK for SL data to the terminal 20A.

If the type 1 HARQ-ACK codebook, which is a semi-static HARQ-ACK codebook, is applied to the HARQ-ACK codebook for SL data, the HARQ-ACK payload size of the type 1 HARQ-ACK codebook may correspond to the number of PSCCH and PSSCH transmission opportunities in a single PSFCH period. In addition, when CA is applied, the HARQ-ACK payload size of the type 1 HARQ-ACK codebook may correspond to the number of PSCCCH and PSSCH transmission opportunities in a single PSFCH period multiplied by the number of CCs. Further, NACK may be generated and transmitted if PSCCH and PSSCH are not received on either PSCCH or PSSCH transmission opportunities. When the type 1 HARQ-ACK codebook, which is a semi-static HARQ-ACK codebook described above, is applied to the HARQ-ACK codebook for SL data, it is possible to prevent incorrect recognition of the payload size.

In addition, if the type 2 HARQ-ACK codebook, which is a dynamic HARQ-ACK codebook, is applied to the HARQ-ACK codebook related to SL Data, the HARQ-ACK payload size of the Type 2 HARQ-ACK codebook may be indicated by the Sidelink Assignment Indicator (hereinafter referred to as "SAI") included in the SCI. The SAI may have the same functionality as the DAI.

The information indicated by the SAI may be a counter in which PSCCH and PSSCH sent from the transmission UE to the reception UE are added, or a total sum of PSCCH and PSSCH sent from the transmission UE to the reception UE.

NACK may be generated and transmitted if a false positive of PDCCH is detected by DAI.

In a case where the type 2 HARQ-ACK codebook, which is a semi-static HARQ-ACK codebook described above, is applied to the HARQ-ACK codebook for SL data, redundant bits may not be generated.

The type of HARQ-ACK codebook that is applied to the HARQ-ACK codebook for SL data may be predefined in the specification, may be pre-configured, may be configured by RRC signaling, or may be indicated by MAC-CE (Medium Access Control-Control Element), DCI or SCI.

When HARQ-ACKs corresponding to multiple SL data items are multiplexed in a PSFCH resource, the PSFCH resource may be associated with or indicated by the last received SCI. Further, when HARQ-ACKs corresponding to multiple SL data items are multiplexed in a PSFCH resource, the PSFCH resource may be associated with or indicated by the first received SCI. Further, when HARQ-ACKs corresponding to multiple SL data items are multiplexed in a PSFCH resource, the PSFCH resource may be associated with or indicated by the SCI, among the received SCIs, corresponding to the largest sub-channel index. Further, when HARQ-ACKs corresponding to multiple SL data items are multiplexed in a PSFCH resource, the PSFCH resource may be associated with or indicated by the SCI, among the received SCIs, corresponding to the smallest sub-channel index. Further, when HARQ-ACKs corresponding to multiple SL data items are multiplexed in a PSFCH resource, the PSFCH resource may be associated with or indicated by the SCI, among the received SCIs, corresponding to the largest CC index. Further, when HARQ-ACKs corresponding to multiple SL data items are multiplexed in a PSFCH resource, the PSFCH resource may be associated with or indicated by the SCI, among the received SCIs, corresponding to the smallest CC index. By associating as described above, HARQ-ACK-multiplexed PSFCH can be shared between the transmission side and the reception side.

Note that the methods of reporting the HARQ-ACK from the terminal 20A to the base station 10 and the methods of reporting the HARQ-ACK from the terminal 20B to the terminal 20A may be used in combination. In other words, in addition to the methods of reporting HARQ-ACK from the terminal 20A to the base station 10, the methods of reporting HARQ-ACK from the terminal 20B to the terminal 20A may be further applied, or, in addition to the methods of reporting HARQ-ACK from the terminal 20B to the terminal 20A, the methods of reporting HARQ-ACK from the terminal 20A to the base station 10 may be further applied.

According to the embodiments described above, it is possible for the terminal 20 to multiplex the HARQ-ACK corresponding to SL data with the HARQ-ACK corresponding to DL data, and to report to the base station 10, by applying a HARQ-ACK codebook. Further, it is possible for the terminal 20 to multiplex HARQ-ACKs corresponding to a plurality of SL data items and report the multiplexed information to the transmission terminal 20.

In other words, in the terminal-to-terminal direct communication, retransmission control can be performed appropriately.

### (Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in an embodiment.

### <Base station 10>

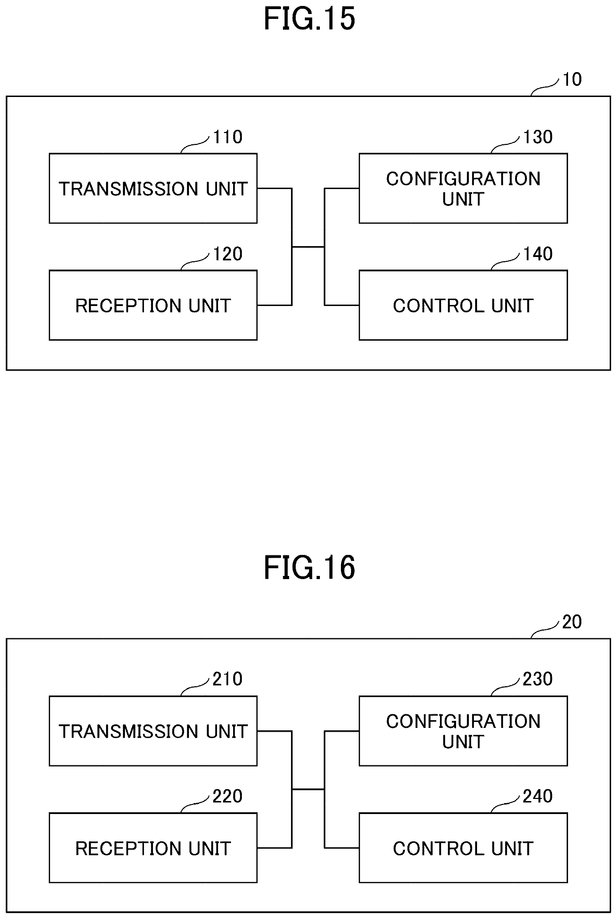

Fig. 15 is a diagram illustrating an example of a functional configuration of the base station 10. As shown in Fig. 15, the base station 10 includes a transmission unit 110, a reception unit 120, a configuration unit 130, and a control unit 140. The functional structure illustrated in Fig. 15 is merely an example. Functional divisions and names of functional units may be anything as long as the division or unit can perform operations according to an embodiment of the present invention.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DL reference signals, and the like to the terminal 20.

The configuration unit 130 stores preset configuration information and various configuration information items to be transmitted to the terminal 20 in a storage apparatus and reads the preset configuration information from the storage apparatus if necessary. Contents of the setting information are, for example, information related to configuration of D2D communication, etc.

As described in an embodiment, the control unit 140 performs processing related to the configuration in which the terminal 20 performs D2D communication. Further, the control unit 140 transmits scheduling of D2D communication and DL communication to the terminal 20 through the transmission unit 110. Further, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

Fig. 16 is a diagram illustrating an example of a functional configuration of the terminal 20. As shown in FIG. 16, the terminal 20 includes a transmission unit 210, a reception unit 220, a configuration unit 230, and a control unit 240. The functional structure illustrated in Fig. 16 is merely an example. Functional divisions and names of functional units may be anything as long as the division or unit can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, or reference signals transmitted from the base station 10. Further, for example, with respect to the D2D communications, the transmission unit transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information received from the base station 10 or the terminal 20 by the receiving unit 220 in the storage apparatus and reads them from the storage apparatus as necessary. Further, the configuration unit 230 stores pre-configured configuration information. Contents of the configuration information are, for example, information related to configuration of D2D communication, etc.

The control unit 240 controls D2D communication with another terminal 20 as described in an embodiment of the present invention. Further, the control unit 240 performs HARQ related processing of the D2D communication and DL communication. The control unit 240 transmits information related to the HARQ response of the D2D communication to the other terminal 20 and the DL communication scheduled by the base station 10. Further, the control unit 240 may perform scheduling of D2D communication for another terminal 20. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 15 and Fig. 16), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

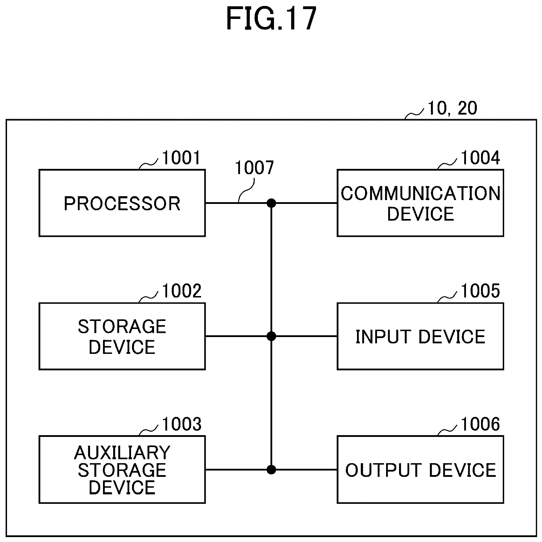

For example, the base station 10, terminal 20, etc., according to an embodiment of the present disclosure may function as a computer for processing the radio communication method of the present disclosure. Fig. 17 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage apparatus 1003 and/or the communication apparatus 1004, and performs various processes according to the program, the software module, or the data. As the program, a program is used that causes the computer to perform at least a part of operations according to an embodiment of the present invention described above. For example, the control unit 140 of the base station 10 illustrated in Fig. 15 may be realized by control programs that are stored in the storage device 1002 and are executed by the processor 1001. Further, for example, the control unit 240 of the terminal 20 illustrated in Fig. 16 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage apparatus 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage apparatus 1002 may be referred to as a register, a cache, a main memory, etc. The storage apparatus 1002 is capable of storing programs (program codes), software modules, or the like, that are executable for performing communication processes according to an embodiment of the present invention.

The auxiliary storage apparatus 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage apparatus 1002 and/or the auxiliary storage apparatus 1003, a server, or any other appropriate medium.

The communication apparatus 1004 is hardware (transmission and reception device) for communicating with computers via at least one of a wired network and a wireless network, and may be referred to as a network device, a network controller, a network card, a communication module, etc. The communication apparatus 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives an external input (e.g., keyboard, mouse, microphone, switch, button, sensor). The output apparatus 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage apparatus 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Embodiment summary)

As described above, according to an embodiment of the present invention, a terminal is provided that includes a reception unit configured to receive data by terminal-to-terminal direct communication from another terminal, a transmission unit configured to transmit a response related to retransmission control corresponding to the data to the other terminal, and a control unit configured to, when the reception unit receives a plurality of data items by terminal-to-terminal direct communication, determine a response related to retransmission control that is transmitted to the other terminal by multiplexing a plurality of responses related to retransmission control.

According to the above arrangement, it is possible for the terminal 20 to multiplex HARQ-ACKs corresponding to a plurality of SL data items and report the multiplexed information to the transmission terminal 20 by using a HARQ-ACK codebook. In other words, in the terminal-to-terminal direct communication, retransmission control can be performed appropriately.

When a codebook defining the retransmission response applied to the determined retransmission control response is semi-static, the payload size of the codebook defining the retransmission response applied to the determined retransmission control response may be determined based on the number of data items included in a period of the resource used for sending the retransmission control response to the other terminal. According to the above arrangement, it is possible for the terminal 20 to multiplex HARQ-ACKs corresponding to a plurality of SL data items and report the multiplexed information to the transmission terminal 20 by using a HARQ-ACK codebook.

When carrier aggregation is applied to terminal-to-terminal direct communication, the payload size of the codebook defining the retransmission response applied to the determined retransmission control response may be determined based on the number of data items included in the period of the resource used for transmitting the retransmission control response to the other terminal multiplied by the number of carriers being carrier aggregated. According to the above arrangement, it is possible for the terminal 20 to multiplex HARQ-ACKs corresponding to a plurality of SL data items and report the multiplexed information to the transmission terminal 20 by using a HARQ-ACK codebook.

If the codebook defining the retransmission response applied to the third response is dynamic, the payload size of the codebook defining the retransmission response applied to the third response may be determined based on a field contained in the information scheduling data by the terminal-to-terminal direct communication. According to the above arrangement, it is possible for the terminal 20 to multiplex HARQ-ACKs corresponding to a plurality of SL data items and report the multiplexed information to the transmission terminal 20 by using a HARQ-ACK codebook.

A resource used for transmitting the plurality of retransmission control responses to the other terminal may be associated with the last received information used for scheduling data by the terminal-to-terminal direct communication. According to the above arrangement, it is possible for the terminal 20 to multiplex HARQ-ACKs corresponding to a plurality of SL data items and report the multiplexed information to the transmission terminal 20 by using a HARQ-ACK codebook.

Further, according to an embodiment of the present invention, a communication method is provided that is performed by a terminal. The communication method includes a reception procedure of receiving data by terminal-to-terminal direct communication from another terminal, a transmission procedure of transmitting a response related to retransmission control corresponding to the data to the other terminal, and a control procedure of, when a plurality of data items are received by terminal-to-terminal direct communication, determining a response related to retransmission control that is transmitted to the other terminal by multiplexing a plurality of responses related to retransmission control.

According to the above arrangement, it is possible for the terminal 20 to multiplex HARQ-ACKs corresponding to a plurality of SL data items and report the multiplexed information to the transmission terminal 20 by using a HARQ-ACK codebook. In other words, in the terminal-to-terminal direct communication, retransmission control can be performed appropriately.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction) . Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer) . The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned) . At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining" . Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other. " It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in this disclosure, the HARQ response is an example of a response related to retransmission control. ACK is an example of a positive response. NACK is an example of a negative response. The HARQ-ACK codebook is an example of a codebook that specifies a retransmission response.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

The present application is based on and claims priority to Japanese patent application No. 2019-155869 filed on August 28, 2019, the entire contents of which are hereby incorporated herein by reference.

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage device
- 1003: Auxiliary storage device
- 1004: Communication device
- 1005: Input device
- 1006: Output device

## Claims

1. A terminal comprising:
a reception unit configured to receive data by terminal-to-terminal direct communication from another terminal;
a transmission unit configured to transmit, to the another terminal, a response related to retransmission control corresponding to the data; and
a control unit configured to, when the reception unit receives a plurality of data items by the terminal-to-terminal direct communication, determine a response related to the retransmission control that is transmitted to the another terminal by multiplexing a plurality of responses related to the retransmission control.

2. The terminal according to claim 1, wherein, in a case where a codebook defining a retransmission response applied to the determined response related to the retransmission control is semi-static, a payload size of the codebook defining the retransmission response applied to the determined response related to the retransmission control is determined based on a number of data items included in a period of a resource used for transmitting a response related to the retransmission control to the another terminal.

3. The terminal according to claim 2, wherein, in a case where carrier aggregation is applied to the terminal-to-terminal direct communication, the payload size of the codebook defining the retransmission response applied to the determined response related to the retransmission control is determined based on a value that is the number of data items included in a period of a resource used for transmitting a response related to the retransmission control to the another terminal, multiplied by a number of carrier-aggregated carriers.

4. The terminal according to claim 2, wherein, in a case where a codebook defining a retransmission response applied to the third response is dynamic, a payload size of the codebook defining a retransmission response applied to the third response is determined based on a field included in information that schedules the data by the terminal-to-terminal direct communication.

5. The terminal according to claim 1, wherein, a resource used for transmitting the plurality of responses related to the retransmission control is associated with a last received information used for scheduling the data by the terminal-to-terminal direct communication.

6. A communication method performed by a terminal, the communication method comprising:
a reception step of receiving data by terminal-to-terminal direct communication from another terminal;
a transmission step of transmitting, to the another terminal, a response related to retransmission control corresponding to the data; and
a control step of, when the reception unit receives a plurality of data items by the terminal-to-terminal direct communication, determining a response related to a retransmission procedure that is transmitted to the another terminal by multiplexing a plurality of responses related to the retransmission control.
